# EUROPEAN PATENT APPLICATION

(11) **EP 1 956 108 A1**
(43) Date of publication of application: **13.08.2008**
(21) Application number: 06822952.5
(22) Date of filing: 27.10.2006
(51) Int. Cl.: C22C 38/00, C21D 9/00

(54) **HIGH-STRENGTH STEEL EXCELLENT IN DELAYED FRACTURE RESISTANCE CHARACTERISTICS AND METAL BOLTS**

(30) Priority: 31.10.2005 JP 2005315708
(71) Applicant: JFE Steel Corporation, Tokyo, 100-0011 (JP)
(72) Inventor: MARUTA, Keiichi, Tokyo 100-0011 (JP); HAYASHI, Toru, Tokyo 100-0011 (JP); KUROSAWA, Nobutaka, Tokyo 100-0011 (JP); KIMURA, Hideto, Tokyo 100-0011 (JP); TOYOOKA, Takaaki, Tokyo 100-0011 (JP); HASE, Kazukuni, Tokyo 100-0011 (JP)
(74) Representative: Grünecker, Kinkeldey, Stockmair & Schwanhäusser Anwaltssozietät
(86) International application number: PCT/JP2006/322034
(87) International publication number: WO 2007/052775

(57) **Abstract**

A high-strength steel having excellent character of delayed fracture can be manufactured at a low cost without adding expensive alloy elements such as Ni, Co or V in large quantities. The steel including a steel microstructure in which a ratio of martensite phase is 90% or more and a diameter of prior austenite grains is 10 µm or less, the steel microstructure being made by hardening and then tempering at 100°C to 400°C, the steel including C: more than 0.30% and not more than 0.50% by mass, Si: not more than 1.0% by mass, Mn: not more than 1.5% by mass, Ti: not more than 0.1% by mass, Mo: not less than 0.3% and not more than 0.50% by mass, B: not less than 0.0005% and not more than 0.01% by mass, and a balance composed of Fe and inevitable impurities.

## Description

### Technical Field

The present invention relates to a high strength steel used for parts mainly used in construction-related, automobile, and industrial machinery industries. More specifically, the invention relates to a high-strength steel that is excellent in character of delayed fracture having sufficient strength and character of delayed fracture to be preferably used as a substitute for existing steel that is excellent in character of delayed fracture containing expensive alloy elements.

### Background Art

Recently, in the automobile and construction industries also, steels having increasingly high strength are used and an increase in strength is required in a wide variety of components. For example, in a sphere of metal bolts, steel with a higher strength such as one having a tensile strength of 1200 MPa grade or 1500 MPa grade are required in the range exceeding a tensile strength of 1000 MPa. The foremost concern in increasing strength is the occurrence of delayed fractures.

Delayed fractures easily occur in a steel having a tensile strength of 1200 MPa or more. Especially for bolts, taking this disadvantage into consideration, the upper strength limit is regulated to F10T and F12T in the Japanese Industrial Standards JIS B1186 and JIS B1051, respectively. Mainly an SCM and the like are used in the above-mentioned steels.

Another known material having a further higher strength and being further excellent in the character of delayed fracture is a maraging steel. Since Ni content is as high as 15 to 20% by mass, the cost of maraging steel is significantly high compared with that of low-alloy steels. Thus, the use of maraging steel as blank steels for manufacturing general components is unfeasible.

Therefore, developments have been undertaken aiming to create a steel that has a character of delayed fracture superior to that of a low-alloy steel and a lower Ni content than that of a maraging steel (for example, refer to patent documents 1-3).

Patent document 1: Japanese Examined Patent Application Publication No. 60-14096

Patent document 2: Japanese Unexamined Patent Application Publication No. 11-80903

Patent document 3: Japanese Unexamined Patent Application Publication No. 2000-144245

### Disclosure of Invention

Although the steels described in patent documents 1 to 3 have a low Ni content, Ni is still contained in an amount of several percent by mass. Therefore, the problem of high cost arises if these steels are used as general high-strength steel in large quantities.

Therefore, an object of the present invention is to overcome the problems of the background art, that is, to suppress an increase in manufacturing cost caused by adding expensive alloy elements such as Ni, Co, and V in large amounts so as to provide a high-strength steel being excellent in character of delayed fracture at a low cost.

The present inventors have conducted extensive investigations to solve the above-mentioned problems and found that a steel having an excellent tensile strength and character of delayed fracture, which exceed those of a maraging steel, can be obtained even if the steel does not contain as much Ni or Co as the maraging steel. This steel can be obtained by adding Mo, B, and Ti in adequate amounts, hardening the steel, properly refining grains of prior austenite, and then tempering in the temperature range of 100°C to 400°C, which is not usually employed in manufacturing bolts and the like. The present inventors have completed the invention on the basis of this finding.

The invention based on the above-mentioned findings has the following characteristics.
(1) A high-strength steel being excellent in character of delayed fracture, the high-strength steel including a steel microstructure in which a ratio of martensite phase is 90% or more and a diameter of prior austenite grains is 10 µm or less, the steel microstructure being made by hardening and then tempering at 100°C to 400°C, the steel including C: more than 0.30% and not more than 0.50% by mass, Si: not more than 1.0% by mass, Mn: not more than 1.5% by mass, Ti: not more than 0.1% by mass, Mo: not less than 0.3% and not more than 0.50% by mass, B: not less than 0.0005% and not more than 0.01% by mass, and a balance composed of Fe and inevitable impurities.
(2) The high-strength steel being excellent in character of delayed fracture according to (1), wherein the steel further includes at least one element selected from the group consisting of Al: not more than 1.0% by mass, Cr: not more than 2.5% by mass, Cu: not more than 1.0% by mass, Ni: not more than 2.0% by mass, and V: not more than 0.5% by mass.
(3) The high-strength steel being excellent in character of delayed fracture according to (1) or (2), wherein the steel further includes at least one element selected from the group consisting of W: not more than 1.0% by mass and Nb: not more than 0.1% by mass.
(4) The high-strength steel being excellent in character of delayed fracture according to any one of the (1) to (3), wherein the hardening is performed using induction heating.
(5) A metal bolt being excellent in character of delayed fracture, the metal bolt including a steel microstructure in which the ratio of martensite phase is 90% or more and the diameter of prior austenite grains is 10 µm or less, the steel microstructure being made by preparing a bolt using the steel according to any one of (1) to (4), hardening the bolt, and tempering the bolt at 100°C to 400°C.

According to the present invention, a high-strength steel having excellent character of delayed fracture can be manufactured at a low cost without adding expensive alloy elements in large quantities. Therefore, high-strength metal bolts and the like that are excellent in character of delayed fracture can be provided at a low cost.

### Brief Description of the Drawings

Fig. 1 illustrates a test piece used in an evaluation test of character of delayed fracture.
Figs. 2A and 2B are diagrams explaining an evaluation test of cold forgeability. Fig. 2A shows the shape of a test piece before the test. Fig. 2B shows a state in which a pressing crack has appeared. In the drawings, reference numeral 1 indicates a test piece and reference numeral 2 indicates a crack.
Best Mode for Carrying Out the Invention

The present invention is now described in detail.

The required characteristics of a high-strength steel of the present invention are a tensile strength of 1500 MPa or more and a yield ratio of 0.9 or more. For example, it is important for high-strength bolts to have a tensile strength of 1500 MPa or more and a high yield ratio to satisfy the F15T or higher standard. A yield ratio (yield strength/tensile strength) of 0.9 or more is needed to prevent release of clamping torque. It is preferable that the high-strength steel has the character of delayed fracture and cold forgeability comparable or superior to those of a maraging steel. Such a high-strength steel having a tensile strength of 1500 MPa or more and an excellent character of delayed fracture can be manufactured as a steel having a structure described below by a manufacturing method described below using a steel having a composition described below.

First, the reasons for limits imposed on the composition of a steel of the present invention will be described. Note here, a percentage of content of each constituent element is on a mass basis.
C: over 0.30% and 0.5% or lower

Carbon is an essential element for maintaining desired strength and it is difficult to keep the desired strength when a C content is 0.30% or lower. On the other hand, if the C content exceeds 0.50%, bulky carbide is formed in a steel microstructure, leading to degradation of a character of delayed fracture. Therefore, the upper limit is determined to be 0.5%.
Si: 1.0% or lower

Since silicon can function as a deoxidizer in melting of steel, Si can be contained. Si, however, significantly lowers cold forgeability of a steel when the Si content exceeds 1.0%. Therefore, the upper limit is determined to be 1.0%.
Mn: 1.5% or lower

Since manganese has a deoxidizing function in melting of steel, Mn can be contained. Mn, however, significantly lowers cold forgeability of a steel when the Mn content exceeds 1.5%. Therefore, the upper limit is determined to be 1.5%.
Mo: 0.30% or higher and 0.5% or lower

Molybdenum is a critical element in the present invention. Mo can improve strength of a steel without serious lowering of ductility. Addition of 0.3% or more of Mo is needed to achieve its effect. On the other hand, when the content exceeds 0.5%, the strength of steel does not improve further while the cost of the steel is increased. Moreover, excessive addition is likely to reduce cold forgeability. Therefore, the upper limit is determined to be 0.5%.
B: 0.0005% or higher and 0.01% or lower

Boron is the most important element contributing to strengthening grain boundaries through being concentrated at the grain boundaries. Delayed fracture mainly occurs at austenite grain boundaries. Strengthening of the grain boundaries contributes considerably to improving character of delayed fracture. In order to strengthen the grain boundaries, the B content is required to be 0.0005% or more. However, when the B content exceeds 0.01%, the effect becomes saturated. Therefore, the content is determined to be within the above-mentioned range.
Ti: 0.1% or lower

Titanium bonds with N, which is contained as an inevitable impurity, and prevents loss of effects of B by preventing B from forming BN. To obtain this effect, the Ti content is preferably 0.005% or more. When more than 0.1% of Ti is added, TiN is formed in large amounts, leading to decrease in strength and fatigue strength of the steel. Therefore, the upper limit is determined to be 0.1%.

Fundamental components of the present invention are mentioned above. Next, the structure of a high-strength steel of the present invention will be described. The following conditions are required in the present invention.

Steel microstructure should be a martensitic structure in which the ratio of martensite phase is 90% or higher.

Martensite is an essential structure for gaining strength. In the present invention, when the martensite structure has a ratio of martensite phase of 90% or higher, an excellent strength characteristic appears. Therefore, the lower limit of the ratio of martensite phase in the steel microstructure is determined to be 90%. In the case that the ratio of martensite phase is below 90%, incomplete transformation phases such as a residual austenite phase and precipitation of carbide and the like, which do not contribute to an increase of the strength, appear excessively and lead to difficulty in achievement of high strength.

The diameter of prior austenite grain of the steel microstructure should be 10 µm or less.

In the present invention, control of the diameter of prior austenite grains is also important. Refined prior austenite grains inhibit precipitation of film-like carbides that appear at grain boundaries and degrade a character of delayed fracture, and the strength of the boundaries is improved thereby. To this effect, the diameter of the grains must be 10 µm or less. Preferably, the diameter is 7 µm or less. In the case that the diameter is 7 µm or less, a character of delayed fracture can be further improved.

In the present invention, at least one element selected from Al, Cr, Cu, Ni and V described below may be included.
Al: 1.0% or lower

Aluminum is a useful element for deoxidation. Also, since Al inhibits growth of austenite grains during hardening, Al is useful for maintaining the strength. At an Al content exceeding 1.0%, however, the effect becomes saturated and disadvantages appear not only in cost but also in cold forgeability. Therefore, if Al is added, the content is 1.0% or less.
Cr: 2.5% or lower

Chromium is effective for improving hardenability and useful for securing case depth. If Cr is contained excessively, generation of residual carbide is promoted under influence of stabilizing effect of carbide and strength is reduced. Thus, an allowable Cr content is up to 2.5%, while it is preferable that the Cr content is as low as possible. To achieve an effect of improving hardenability, the Cr content is preferably 0.2% or more.
Cu: 1.0% or lower

Copper is effective for improving hardenability and enhances strength through dissolution in a solid-solution ferrite. At a Cu content exceeding 1.0%, cracks may occur during hot rolling. Therefore, if Cu is added, the content is 1.0% or less. To achieve an effect of improving hardenability and strength, the Cu content is preferably 0.2% or more.
Ni: 2.0% or lower

Nickel is effective for improving hardenability. Since Ni inhibits generation of carbide, precipitation of carbide at grain boundaries is inhibited, so that strength of the boundaries is improved. Thus, Ni contributes to an improvement of the strength and a character of delayed fracture. However, Ni is expensive and if the Ni content exceeds 2.0%, the cost of the steel is markedly increased. Therefore, when Ni is added, the content is 2.0% or less. To achieve an effect of improving hardenability, strength, and character of delayed fracture, the Ni content is preferably 0.5% or more.
V: 0.5% or lower

Vanadium is expected to function as a reinforcing element by bonding with C in a steel. V also has an effect of improving temper softening resistance and contributes to improvement of strength. However, if the V content exceeds 0.5%, the effect becomes saturated. Therefore, if V is added, the content is 0.5% or less. To achieve an effect of improved strength, the V content is preferably 0.1% or more.

Further, in the present invention, at least one element selected from W and Nb below can be further included.
Nb: 0.1% or lower

Niobium is effective for improving hardenability and contributes as a precipitation reinforcement element to improve strength and toughness. To achieve this effect, the Nb content is preferably 0.005% or more. If the content exceeds 0.1%, however, the effect becomes saturated. Therefore, when Nb is added, the content is 0.1% or less.
W: 0.1% or lower

W forms stable carbide and functions effectively as a reinforcement element. However, if the W content exceeds 1.0%, cold forgeability is lowered. Therefore, if W is added, the content is 1.0% or less.

The balance other than the above-mentioned elements is composed of Fe and inevitable impurities. Examples of main inevitable impurities are S, P, N, and O. Allowable contents of these elements are as follows, S: 0.05% or less, P: 0.05% or less, N: 0.01% or less, and O: 0.01% or less.

Next, a method for manufacturing a high-strength steel being excellent in character of delayed fracture of the present invention will be described. The high-strength steel of the present invention is manufactured using a steel having the above-mentioned composition and by hardening and tempering the blank which is formed into a desired shape in advance.

The steel composed of the above-mentioned elements may be a steel manufactured by using a converter or by vacuum melting. A steel ingot or a continuously cast slab is heated and hot-rolled, descaled by acid pickling, and then cold-rolled to a desired thickness. Subsequently, the resulting steel is formed through forging or rolling and the like into parts having desired shapes. In order to form a martensite structure, hardening and tempering are performed. Then, for example, bolts are manufactured.

Hardening treatment: Induction hardening is preferably performed.

If induction heating is used in hardening treatment, the hardening can be achieved immediately after the temperature reaches the required temperature region. This allows a fine crystal grain structure to be obtained while preventing the crystal grains from growing to an undesirable size. In this regard, it is effective to employ a process in which the steel is heated to a maximum temperature of 800°C to 1100°C at a temperature elevation rate of 100°C/s or more and the hardening is conducted immediately after the maximum temperature is reached.
Tempering temperature: 100°C to 400°C

Tempering is the most critical step in the present invention. Generally, the tempering temperature of 100°C to 400°C is the temperature range usually not employed for typical steels for bolts or the like. In the present invention, however, this temperature range is employed since B contained in the steel does not diffuse or undesirably precipitated, thereby successfully contributing to strengthening of grain boundaries through being concentrated at the boundaries. Moreover, since the temperature of tempering is not high, certain levels of strength and character of delayed fracture are maintained, by the synergy with the effect produced by fine grains.

A proper combination of the three conditions, that is, the composition range, the fine grain structure, and the tempering temperature, which can strengthen grain boundaries, allows manufacture of a steel that has both high strength and an excellent character of delayed fracture, even though the two characteristics usually conflict with each other.

The steel obtained through the above-mentioned process has high strength and an excellent character of delayed fracture comparable to those of a maraging steel, while the steel can be manufactured at a low cost. The steel can be applied to bolts for automobiles and constructions requiting high strength, PC steel rods, and metal belts in power transmission mechanisms used in a continuous variable transmission (CVT) system, which is a transmission system of automobiles.

In manufacturing a bolt, a steel having the above-mentioned composition is formed into a bolt through cold forging or rolling, and the bolt is hardened then tempered at 100°C to 400°C. The obtained metal bolt has a steel microstructure in which the ratio of martensite phase is 90% or higher and a diameter of prior austenite grains is 10 µm or less.

### EXAMPLES

### EXAMPLE 1

Steels Nos. 1 to 18 as shown in Table 1 were manufactured by vacuum melting. These steels were heated to 1100°C and hot-forged to form round bars of 60 mm in diameter (φ 60 mm). Then the round bars were treated by a normalizing process under a temperature of 850°C for one hour to form blanks. Tensile testing and evaluation of character of delayed fracture, observation of the structure, and evaluation of cold.forgeability were performed after performance of the thermal process mentioned below.

Tensile test pieces having a shape specified in JIS 5 were cut from round blank bars at the 1/4-d point thereof. These test pieces were treated by two-step induction hardening in which the test pieces were heated to 1050°C at a rate of 400°C/s using induction heating and then hardened immediately, and then heated to 950°C at a rate of 400°C/s using induction heating and hardened immediately. Subsequently, the pieces were tempered at 180°C for 30 minutes and then subjected to the tensile test.

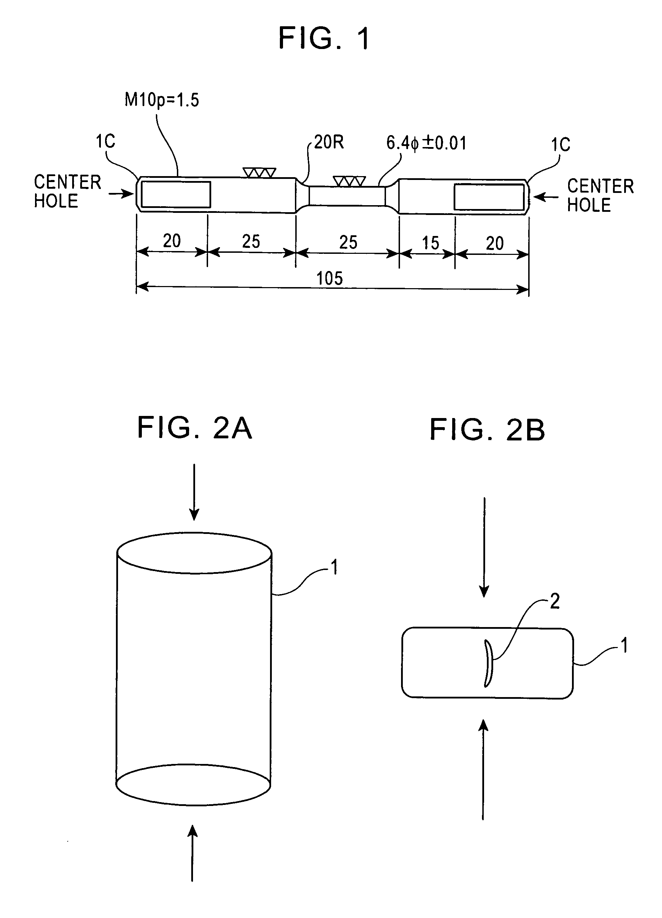

An evaluation of the character of delayed fracture was performed through the procedure described below. Test pieces shown in Fig. 1 were cut from round blank bars at the 1/4-d point thereof. The conditions of hardening and tempering were the same as those used in the tensile test. The characters of delayed fracture of these test pieces were evaluated using a constant load test. The constant load test was performed by immersing the test piece in a 5% NaCl solution with pH adjusted to 1.5 with acetic acid, loading a certain weight on the test piece, and measuring the elapsed time until the test piece was fractured. If the test piece was not fractured after 200 hours, the test was discontinued and the piece was evaluated as "no fracture". The tests were performed using different weights, and a curve was obtained, which indicates a relationship between the elapsed time and the weight. A lower limit stress was determined on the basis of the load at which fracture did not occur. A character of delayed fracture was evaluated on the basis of this value. A character of delayed fracture was evaluated as excellent when the lower limit stress was 550 MPa or more, which was equal to the lower limit stress of a maraging steel.

The ratio of the martensite structure was determined by corroding each test piece with 3% nitric acid alcohol, observing a particular area of the test piece with an optical microscope, and calculating the ratio of the area of the martensite in the field of view.

For measurement of a diameter of prior austenite grains, an etchant was used to make grain boundaries of prior austenite grains visible. The solution used as the etchant contained an aqueous picric acid solution made by dissolving 50 g of picric acid in 500 g of water, 11 g of sodium dodecyl benzenesulfonate, 1 g of ferrous chloride, and 1.5 g of oxalic acid. After the grain boundaries were made visible by corrosion, the prior austenite grains were observed and a micrograph at a magnification of 1000 was taken. Then the diameter of prior austenite grains in the micrograph was determined using a sectioning technique.

For evaluation of cold forgeability, test pieces 1 having a tablet shape of φ 15 mm and 22.5 mm in height as shown in Fig. 2A were cut from a round bar at the 1/4-d point thereof along the rolling direction. The forging test was performed by pressing ten test pieces (n = 10) under various compression rates, and the cold forgeability was evaluated on the basis of presence of cracks. An arrow shown in Fig. 2 denotes the pressing direction. Crack 2 was generated as shown in Fig. 2B. A relationship between incidence rate and compression rate of the cracks generated under each compression rate was plotted. The compression rate at which 50% (five pieces) of the test pieces were fractured was defined as a forgeability evaluation value. The higher the value, the better the forgeability. If the forgeability value was 80% or more, such test pieces were evaluated as having forgeability comparable or superior to that of a maraging steel.

A steel 1 shown in Table 1 was a maraging steel (Fe-18% Ni-5% Mo-10% Co) that was prepared for comparison. Test pieces having the same shape as above were cut out, heated at a temperature of 820°C, hardened by air-cooling, and aged under heating at a temperature of 520°C. The resulting test pieces were then subjected to various evaluation.

The test results of the ratio of martensite structure, diameter of prior austenite grains, tensile strength, yield ratio, delayed fracture (lower limit stress), and cold forgeability are shown in Table 1. According to Table 1, strength and character of delayed fracture of the steel that has the chemical composition and the structure defined in the present invention exceed the maraging steel in the characters of strength and delayed fracture.

### EXAMPLE 2

In the present example, an experiment was conducted to investigate influence of the structure on a steel 4 having components shown in Table 1. The procedure of the experiment is completely the same as EXAMPLE 1 except for a temperature of induction heating as the second step of the two-step hardening. In order to investigate an influence of a diameter of prior austenite grains, the temperature of induction heating was varied from 850°C to 1050°C so as to manufacture blank steels Nos. 19 to 21. The results of the experiment are shown in Table 2.

It was found that the character of delayed fracture was significantly lowered when the diameter of prior austenite grains became larger than 10 µm.

### EXAMPLE 3

In the present example, an experiment was conducted to investigate effects of components other than the main components. Steels having compositions shown in Table 3 (Nos. 22 to 35) were manufactured by vacuum melting. Tensile test, evaluation of delayed fracture, observation of the structure, and evaluation of cold forgeability were conducted as in EXAMPLE 1. The results are shown in Table 3.

It was found that when Cr and Al were excessively contained, the cold forgeability was lowered, and when Ni, Cu, V, W, and Nb were excessively contained, effects of Ni, Cu, V, W, and Nb were saturated.

### EXAMPLE 4

In the present example, an experiment was conducted to investigate influence of a temperature of tempering on a steel 4 having components shown in Table 1. Blank steels Nos. 36 to 40 were manufactured by conducting the process of EXAMPLE 1 up to hardening, and tempering at temperatures varied in the range of 70°C and 450°C instead of 180°C in EXAMPLE 1.

It was found that when the temperature of tempering is between 100°C and 400°C, both of high strength and excellent character of delayed fracture are achieved.

### EXAMPLE 5

In the present example, the character of delayed fracture of the bolt manufactured according to the present method was evaluated. Using steels 1 (maraging steel), 4, and 11 shown in Table 1, forged round bars were manufactured according to the same method as EXAMPLE 1. Test materials having predetermined size were cut out from the forged round bar at the 1/4-d point thereof, and then formed into M22 bolts through cold forging and rolling. Then the bolts were hardened by induction heating and tempered at 180°C. Thirty bolts were made from each of the test materials. The bolts were clamped on a steel plate (SS400) with maximum torque, and then subjected a repetition test for five months in which the bolts were sprayed with a 3.5% brine and dried repeatedly. After the test, fractured bolts among the thirty bolts were counted and recorded. The result is shown in Table 5.

The steel 4 of the present invention shows the characteristics superior to that of steel 1, i.e., the maraging steel. On the other hand, 80% of bolts made from a comparative steel 11 were fractured.

**Table 1**

| | Chemical composition (Percent by mass) | | | | | | Structure | | Measurement results | | | | |
|---|---|---|---|---|---|---|---|---|---|---|---|---|---|
| No. | C | Si | Mn | Mo | Ti | B | Ratio of martensite phase (%) | Diameter of prior austenite grains (µm) | Tensile strength (MPa) | Yield ratio | Lower limit stress (MPa) | Cold forgeability (%) | Notes |
| 1 | Maraging steel | | | | | | - | - | 2100 | 0.94 | 550 | 80 | Comparative example (Maraging steel) |
| 2 | 0.24 | 0.70 | 0.62 | 0.40 | 0.021 | 0.0020 | 80 | 5.8 | 1420 | 0.88 | 545 | 90 | Comparative example |
| 3 | 0.38 | 0.72 | 0.64 | 0.40 | 0.022 | 0.0019 | 92 | 5.5 | 1825 | 0.92 | 600 | 85 | Example of the invention |
| 4 | 0.43 | 0.71 | 0.65 | 0.40 | 0.022 | 0.0020 | 94 | 5.5 | 2130 | 0.92 | 625 | 85 | Example of the invention |
| 5 | 0.54 | 0.72 | 0.66 | 0.39 | 0.021 | 0.0021 | 95 | 5.0 | 2215 | 0.94 | 455 | 75 | Comparative example |
| 6 | 0.42 | 0.29 | 0.62 | 0.40 | 0.021 | 0.0019 | 94 | 5.4 | 2105 | 0.92 | 625 | 85 | Example of the invention |
| 7 | 0.43 | 0.95 | 0.61 | 0.39 | 0.021 | 0.0022 | 94 | 5.5 | 2180 | 0.94 | 625 | 85 | Example of the invention |
| 8 | 0.43 | 1.22 | 0.60 | 0.41 | 0.020 | 0.0020 | 94 | 5.0 | 2205 | 0.94 | 650 | 60 | Comparative example |
| 9 | 0.43 | 0.69 | 1.07 | 0.39 | 0.022 | 0.0021 | 95 | 5.5 | 2165 | 0.95 | 650 | 80 | Example of the invention |
| 10 | 0.43 | 0.71 | 1.59 | 0.40 | 0.020 | 0.0021 | 94 | 5.6 | 2170 | 0.94 | 650 | 55 | Comparative example |
| 11 | 0.41 | 0.70 | 0.61 | 0.26 | 0.020 | 0.0020 | 94 | 6.0 | 1410 | 0.82 | 575 | 85 | Comparative example |
| 12 | 0.43 | 0.73 | 0.60 | 0.32 | 0.021 | 0.0019 | 93 | 5.5 | 2060 | 0.92 | 600 | 80 | Example of the invention |
| 13 | 0.42 | 0.72 | 0.62 | 0.49 | 0.020 | 0.0021 | 93 | 5.7 | 2185 | 0.95 | 625 | 80 | Example of the invention |
| 14 | 0.43 | 0.69 | 0.62 | 0.61 | 0.021 | 0.0022 | 93 | 5.8 | 2190 | 0.94 | 625 | 60 | Comparative example |
| 15 | 0.42 | 0.69 | 0.61 | 0.41 | 0.075 | 0.0023 | 94 | 5.6 | 1805 | 0.92 | 600 | 85 | Example of the invention |
| 16 | 0.43 | 0.71 | 0.62 | 0.40 | 0.110 | 0.0025 | 94 | 5.4 | 1465 | 0.82 | 475 | 80 | Comparative example |
| 17 | 0.42 | 0.69 | 0.62 | 0.40 | 0.021 | 0.0002 | 94 | 5.6 | 2065 | 0.94 | 425 | 85 | Comparative example |
| 18 | 0.43 | 0.71 | 0.63 | 0.39 | 0.020 | 0.0060 | 95 | 5.4 | 2185 | 0.94 | 650 | 85 | Example of the invention |

| | | | | | | | | | | | | | |
|---|---|---|---|---|---|---|---|---|---|---|---|---|---|
| Underlines mean that the numbers are out of the range used in the present invention. | | | | | | | | | | | | | |

**Table 2**

| | Chemical composition (Percent by mass) | | | | | | Structure | | Measurement results | | | | |
|---|---|---|---|---|---|---|---|---|---|---|---|---|---|
| No. | C | Si | Mn | Mo | Ti | B | Ratio of martensite phase (%) | Diameter of prior austenite grains (µm) | Tensile strength (MPa) | Yield ratio | Lower limit stress (MPa) | Hardening temperature (°C) | Notes |
| 19 | 0.43 | 0.71 | 0.65 | 0.40 | 0.022 | 0.0020 | 93 | 4.5 | 2205 | 0.95 | 675 | 850 | Example of the invention |
| 4 | 0.43 | 0.71 | 0.65 | 0.40 | 0.022 | 0.0020 | 94 | 5.5 | 2130 | 0.92 | 625 | 950 | Example of the invention |
| 20 | 0.43 | 0.71 | 0.65 | 0.40 | 0.022 | 0.0020 | 94 | 9.0 | 2100 | 0.92 | 625 | 100 | Example of the invention |
| 21 | 0.43 | 0.71 | 0.65 | 0.40 | 0.022 | 0.0020 | 95 | 11.5 | 1910 | 0.90 | 525 | 1050 | Comparative example |

| | | | | | | | | | | | | | |
|---|---|---|---|---|---|---|---|---|---|---|---|---|---|
| Underlines mean that the numbers are out of the range used in the present invention. | | | | | | | | | | | | | |

**Table 3**

| | Chemical composition (Percent by mass) | | | | | | | | | | | | | Structure | | Measurement results | | | | |
|---|---|---|---|---|---|---|---|---|---|---|---|---|---|---|---|---|---|---|---|---|
| No. | C | Si | Mn | Mo | Cr | Al | Cu | Ni | V | W | Nb | Ti | B | Ratio of martenite phase (%) | Diameter of prior austenite grains (µm) | Tensile strength (MPa) | Yield ratio | Lower limit stress (MPa) | Cold forgeability (%) | Notes |
| 22 | 0.43 | 0.69 | 0.61 | 0.40 | 1.5 | - | - | - | - | - | - | 0.022 | 0.0021 | 94 | 5.5 | 2215 | 95 | 700 | 85 | Example of the invention |
| 23 | 0.44 | 0.70 | 0.60 | 0.40 | 3.0 | - | - | - | - | - | - | 0.021 | 0.0021 | 94 | 5.4 | 2340 | 95 | 700 | 60 | Comparative example |
| 24 | 0.41 | 0.71 | 0.63 | 0.39 | - | 0.8 | - | - | - | - | - | 0.022 | 0.0020 | 94 | 5.8 | 2195 | 94 | 675 | 80 | Example of the invention |
| 25 | 0.43 | 0.72 | 0.63 | 0.41 | - | 1.5 | - | - | - | - | - | 0.022 | 0.0019 | 94 | 5.6 | 2200 | 92 | 675 | 60 | Comparative example |
| 26 | 0.43 | 0.72 | 0.65 | 0.40 | - | - | 0.5 | - | - | - | - | 0.021 | 0.0020 | 94 | 5.5 | 2185 | 94 | 675 | 80 | Example of the invention |
| 27 | 0.44 | 0.71 | 0.62 | 0.39 | - | - | 1.5 | - | - | - | - | 0.021 | 0.0021 | 94 | 5.7 | 2190 | 92 | 675 | 80 | Comparative example |
| 28 | 0.42 | 0.73 | 0.62 | 0.41 | - | - | - | 0.5 | - | - | - | 0.020 | 0.0020 | 94 | 5.8 | 2200 | 95 | 675 | 80 | Example of the invention |
| 29 | 0.44 | 0.69 | 0.61 | 0.40 | - | - | - | 2.4 | | - | - | 0.021 | 0.0021 | 94 | 6.0 | 2205 | 95 | 675 | 80 | Comparative example |
| 30 | 0.41 | 0.71 | 0.64 | 0.41 | - | - | - | - | 0.35 | - | - | 0.022 | 0.0018 | 94 | 6.0 | 2190 | 94 | 700 | 80 | Example of the invention |
| 31 | 0.43 | 0.70 | 0.62 | 0.39 | - | - | - | - | 0.55 | - | - | 0.023 | 0.0020 | 94 | 5.5 | 2200 | 92 | 700 | 80 | Comparative example |
| 32 | 0.42 | 0.70 | 0.63 | 0.40 | - | | | | - | 0.5 | - | 0.021 | 0.0021 | 94 | 5.4 | 2240 | 92 | 675 | 85 | Example of the invention |
| 33 | 0.44 | 0.71 | 0.64 | 0.41 | - | - | - | - | - | 1.2 | - | 0.020 | 0.0021 | 94 | 5.8 | 2250 | 92 | 675 | 65 | Comparative example |
| 34 | 0.41 | 0.70 | 0.61 | 0.41 | - | - | - | - | - | - | 0.05 | 0.022 | 0.0022 | 94 | 5.7 | 2175 | 94 | 650 | 80 | Example of the invention |
| 35 | 0.43 | 0.71 | 0.60 | 0.41 | | | | | | - | 0.15 | 0.021 | 0.0022 | 94 | 5.9 | 2185 | 92 | 650 | 80 | Comparative example |

| | | | | | | | | | | | | | | | | | | | | |
|---|---|---|---|---|---|---|---|---|---|---|---|---|---|---|---|---|---|---|---|---|
| Underlines mean that the numbers are out of the range used in the present invention. | | | | | | | | | | | | | | | | | | | | |

**Table 4**

| | Chemical composition (Percent by mass) | | | | | | Structure | | Measurement results | | | | | |
|---|---|---|---|---|---|---|---|---|---|---|---|---|---|---|
| No. | C | Si | Mn | Mo | Ti | B | Ratio of martensite phase (%) | Diameter of prior austenite grains (µm) | Tensile strength (MPa) | Yield ratio | Lower limit stress (MPa) | Cold forgeability (%) | Tempering temperature (°C) | Notes |
| 4 | 0.43 | 0.71 | 0.65 | 0.40 | 0.022 | 0.0020 | 94 | 5.5 | 2130 | 0.92 | 625 | 85 | 180 | Example of the invention |
| 36 | 0.43 | 0.71 | 0.65 | 0.40 | 0.022 | 0.0020 | 94 | 5.5 | 2350 | 0.82 | 580 | 60 | 75 | Comparative example |
| 37 | 0.43 | 0.71 | 0.65 | 0.40 | 0.022 | 0.0020 | 94 | 5.4 | 2260 | 0.91 | 600 | 85 | 120 | Example of the invention |
| 38 | 0.43 | 0.71 | 0.65 | 0.40 | 0.022 | 0.0020 | 94 | 5.5 | 2010 | 0.94 | 675 | 90 | 250 | Example of the invention |
| 39 | 0.43 | 0.71 | 0.65 | 0.40 | 0.022 | 0.0020 | 94 | 5.4 | 1750 | 0.95 | 700 | 90 | 350 | Example of the invention |
| 40 | 0.43 | 0.71 | 0.65 | 0.40 | 0.022 | 0.0020 | 94 | 5.5 | 1420 | 0.97 | 700 | 95 | 450 | Comparative example |

| | | | | | | | | | | | | | | |
|---|---|---|---|---|---|---|---|---|---|---|---|---|---|---|
| Underlines mean that the numbers are out of the range used in the present invention. | | | | | | | | | | | | | | |

**Table 5**

| | Chemical composition (Percent by mass) | | | | | | Measurement results | Notes |
|---|---|---|---|---|---|---|---|---|
| No. | C | Si | Mn | Mo | Ti | B | Number of fractured bolts | |
| 1 | MARAGING STEEL | | | | | | 4/30 | Comparative example (Maraging steel) |
| 4 | 0.43 | 0.71 | 0.65 | 0.40 | 0.022 | 0.0020 | 2/30 | Example of the invention |
| 11 | 0.41 | 0.70 | 0.61 | 0.26 | 0.020 | 0.0020 | 24/30 | Comparative example |

| | | | | | | | | |
|---|---|---|---|---|---|---|---|---|
| Underlines mean that the numbers are out of the range used in the present invention. | | | | | | | | |

## Claims

1. A high-strength steel being excellent in character of delayed fracture, the high-strength steel comprising a steel microstructure in which a ratio of martensite phase is 90% or more and a diameter of prior austenite grains is 10 µm or less, the steel microstructure being made by hardening and then tempering at 100°C to 400°C, the steel including C: more than 0.30% and not more than 0.50% by mass, Si: not more than 1.0% by mass, Mn: not more than 1.5% by mass, Ti: not more than 0.1% by mass, Mo: not less than 0.3% and not more than 0.50% by mass, B: not less than 0.0005% and not more than 0.01% by mass, and a balance composed of Fe and inevitable impurities.

2. The high-strength steel being excellent in character of delayed fracture according to claim 1, wherein the steel further includes at least one element selected from the group consisting of Al: not more than 1.0% by mass, Cr: not more than 2.5% by mass, Cu: not more than 1.0% by mass, Ni: not more than 2.0% by mass, and V: not more than 0.5% by mass.

3. The high-strength steel being excellent in character of delayed fracture according to claim 1 or 2, wherein the steel further includes at least one element selected from the group consisting of W: not more than 1.0% by mass and Nb: not more than 0.1% by mass.

4. The high-strength steel being excellent in character of delayed fracture according to any one of claims 1 to 3, wherein the hardening is performed using induction heating.

5. A metal bolt being excellent in character of delayed fracture, the metal bolt including a steel microstructure in which the ratio of martensite phase is 90% or more and the diameter of prior austenite grains is 10 µm or less, the steel microstructure being made by preparing a bolt using the steel according to any one of claims 1 to 4, hardening the bolt, and tempering the bolt at 100°C to 400°C.
